# DEMANDE DE BREVET EUROPEEN

(11) **EP 0 798 902 A1**
(43) Date de publication de la demande: **01.10.1997**
(21) Numéro de dépôt: 97400655.3
(22) Date de dépôt: 24.03.1997
(51) Int. Cl.: H04L 27/227

(54) **Estimateur et récupérateur de phase robuste pour signaux numériques affectés notamment de gigue de phase**

(30) Priorité: 29.03.1996 FR 9603993
(71) Demandeur: ALCATEL TELSPACE, 92734 Nanterre Cédex (FR)
(72) Inventeur: Marchesani, Rossano, 66100 Chieti (IT); Roux, Pierre, 95100 Argenteuil (IT); De Villenaut, Gilles, 75007 Paris (IT)
(74) Mandataire: Scheer, Luc

(57) **Abrégé**

L'invention concerne un dispositif de calage de la phase d'un signal numérique constitué par deux composantes numériques à corriger définissant, à chaque temps symbole, deux échantillons d'un signal reçu, ledit dispositif étant destiné à alimenter un régénérateur du signal en bande de base par échantillonnage et décision à seuil, comprenant une première boucle de verrouillage (31) de phase pilotée par un premier intégrateur (37) d'erreur de phase à large bande, ladite première boucle (31) étant alimentée par le signal d'entrée (30) du dispositif et fournissant une première estimation de l'erreur de phase (36), et une seconde structure auxiliaire (32) de verrouillage de phase pilotée par des moyens de retraitement (38) de ladite première estimation de l'erreur de phase (36) élaborée par ladite première boucle de verrouillage de phase (31), et fournissant en sortie un signal calé en phase alimenté à un régénérateur de sortie (34) assurant la régénération du signal en bande de base, ladite seconde structure auxiliaire de verrouillage de phase (32) étant alimentée par ledit signal d'entrée (30) du dispositif à travers des moyens de retard (35).

## Description

Le domaine de l'invention est celui des récepteurs de communications numériques équipés de moyens d'estimation et de récupération de phase.

Dans un récepteur numérique, le signal en bande de base est restitué par un régénérateur qui fonctionne par échantillonnage et décision à seuil. Les moyens d'estimation et de récupération de phase sont situés en amont du régénérateur, et ont pour fonction la récupération en synchronisme et en phase de la porteuse, ainsi que le cas échéant la mise en oeuvre de corrections adaptatives permettant d'améliorer la qualité du signal sur lequel va travailler le régénérateur.

Parmi les facteurs perturbant le fonctionnement des moyens d'estimation et de récupération de phase on compte notamment l'estimation imparfaite des données reçues ou encore le bruit gaussien et le bruit de phase.

Le bruit de phase est d'autant plus pregnant que les composants utilisés pour l'oscillateur local sont de qualité médiocre, typiquement dans le cas des oscillateurs bon marché. Il devient en outre un élément crucial dans le cas des ondes hyperfréquences à relativement faible débit (par exemple de l'ordre de quelques Mbit/s, voire moins) et à flexibilité en fréquence (c'est à dire offrant la possibilité pour l'utilisateur (opérateur ou client final) de choisir une fréquence parmi une bande de fréquence possible).

On connaît divers moyens pour lutter contre le bruit de phase, consistant essentiellement soit à concevoir et réaliser des oscillateurs à faible bruit, soit à mettre en oeuvre des démodulateurs robustes.

Dans cette seconde catégorie de solutions, on sait utiliser une technique telle que la boucle de Costas, applicable en aval d'un circuit de récupération de la phase de porteuse, et implémentée soit en version analogique, soit en version numérique en utilisant un modulateur numérique. Une autre solution de récupérateur de phase classique, plus efficace, consiste à obtenir l'erreur après régénération, puis à intégrer sa composante tangentielle pour asservir un modulateur numérique.

Par ailleurs, dans le cas où la phase de porteuse n'est pas encore récupérée, on peut mettre en oeuvre par exemple les techniques connues de démodulation différentielle. Toutefois, ces techniques sont moins performantes en terme de résistance au bruiL

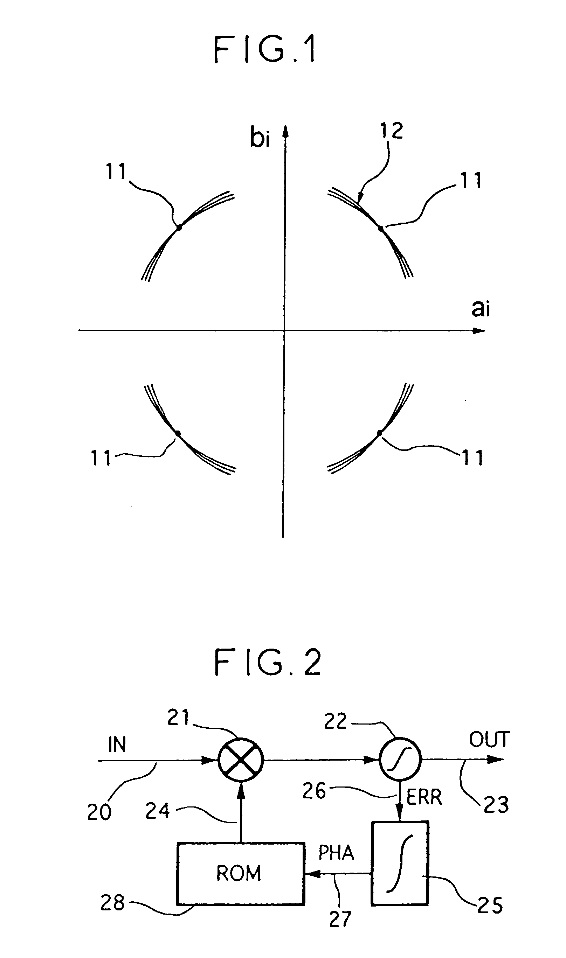

Le bruit de phase est généralement constituée par une gigue de phase, c'est à dire une oscillation de la phase autour d'un point milieu. Comme représenté en figure 1, dans l'hypothèse d'une modulation MAQ (Modulation d'Amplitude en Quadrature), telle qu'une modulation à 4 états de phase (4PSK), la gigue en phase se traduit schématiquement par une oscillation en rotation des points (11) de la constellation sur des arcs de cercles (12), selon une fréquence et une étendue données.

Quelque soit la technique utilisée, pour compenser les bruits de phase générés dans les oscillateurs peu performants, la seule solution est d'élargir la bande de la boucle de récupération de phase afin de suivre le bruit dans les fréquences élevées. Toutefois, on se trouve alors confronté à un certain nombre de limites et contraintes :
- l'augmentation de la largeur de bande de la boucle, qui va de pair avec un accroissement du gain, conduit à une dégradation de l'estimation d'erreur fournie au modulateur numérique ;
- par ailleurs, le retard électrique du signal traité dans la boucle marque une limite à l'augmentation de largeur de bande de la boucle, du fait que le retard entraîne une instabilité pour les fréquences élevées, et génère ainsi un bruit de phase additionnel. Le risque d'instabilité est en outre d'autant plus grand que le gain est important.

Il faut enfin également veiller à ce que le bruit de la boucle elle-même ne vienne pas dégrader le signal dans une mesure supérieure à l'amélioration escomptée du traitement du signal effectué dans la boucle.

En d'autres termes, avec les techniques actuelles, le choix final des caractéristiques d'un démodulateur numérique résulte toujours d'un compromis entre d'une part accroître au maximum la largeur de la bande de bruit que l'on se donne de traiter, ce qui suppose d'intégrer peu le signal d'erreur, et d'autre part limiter les risques d'instabilité et de génération de bruit induit par le traitement de démodulation, ce qui recommande d'intégrer beaucoup le même signal d'erreur.

L'invention a pour objectif de proposer une technique et des circuits de démodulation numérique qui permettent au moins en partie d'échapper à ce dilemme.

Ainsi, un objectif essentiel de l'invention est de fournir un montage de calage de phase pour démodulateur numérique qui permette de travailler avec un gain fort et sur une largeur de bande élevée, au delà des limites de stabilité et d'amplification de la gigue de phase des montages traditionnels.

Un objectif complémentaire de l'invention est de fournir un concept de circuit qui soit susceptible d'être mis en oeuvre pour des signaux numériques dont on a déjà, ou non, récupéré la phase de la porteuse.

Un autre objectif de l'invention est de fournir une telle technique qui permette de traiter efficacement la gigue de phase, et d'une manière générale de faire baisser efficacement le niveau de bruit dans le signal fourni au régénérateur numérique.

Ces objectifs, ainsi que d'autres qui apparaîtront par la suite sont atteints selon l'invention à l'aide d'un dispositif de calage de la phase d'un signal numérique constitué par deux composantes numériques à corriger définissant, à chaque temps symbole, deux échantillons d'un signal reçu, ledit dispositif étant destiné à alimenter un régénérateur du signal en bande de base par échantillonnage et décision à seuil, ce dispositif comprenant une première boucle de verrouillage de phase pilotée par un premier intégrateur d'erreur de phase à large bande, ladite première boucle étant alimentée par le signal d'entrée du dispositif et fournissant une première estimation de l'erreur de phase.

Le dispositif comprend en outre une seconde structure auxiliaire de verrouillage de phase pilotée par des moyens de retraitement de ladite première estimation de l'erreur de phase élaborée par ladite première boucle de verrouillage de phase, et fournissant en sortie un signal calé en phase alimenté à un régénérateur de sortie assurant la régénération du signal en bande de base, ladite seconde structure de verrouillage de phase étant alimentée par ledit signal d'entrée du dispositif à travers des moyens de retard.

Cette seconde structure auxiliaire peut avantageusement être une "boucle" ouverte ou fermée, comme il sera décrit dans la suite de la description.

De façon préférentielle, ladite première boucle de verrouillage de phase comprend :
- un premier modulateur complexe auquel sont appliquées lesdites composantes numériques à corriger et fournissant des premières composantes numériques corrigées, ledit premier modulateur complexe assurant la rotation de la constellation des états de phase dudit signal reçu en fonction d'une première information représentative dudit décalage de phase ;
- un premier régénérateur recevant lesdites premières composantes numériques corrigées et fournissant un premier signal d'erreur ;
- ledit premier intégrateur à large bande recevant ledit premier signal d'erreur et fournissant ladite première information représentative dudit décalage de phase audit premier modulateur complexe.

Avantageusement, les moyens de retraitement de ladite seconde structure auxiliaire fournissent à un second modulateur complexe un signal correspondant à une seconde estimation de l'erreur de phase, lesdites composantes numériques étant appliquées, par l'intermédiaire desdits moyens de retard, audit second modulateur complexe, ledit second modulateur complexe fournissant des secondes composantes numériques corrigées audit régénérateur de sortie.

De façon avantageuse, et dans le cas où le dispositif de l'invention est plus particulièrement destiné au calage de la phase de signaux d'entrée du dispositif pour lesquels la récupération de phase de la porteuse a déjà été effectué, ladite première estimation de l'erreur de phase fournie auxdits moyens de retraitement est constituée par ladite première information représentative dudit décalage de phase issue dudit premier intégrateur à large bande, et lesdits moyens de retraitement sont constitués par des moyens de filtrage.

Dans le cas où le dispositif de l'invention est plus particulièrement destiné au calage de la phase de signaux d'entrée du dispositif pour lesquels le calage en fréquence de la porteuse n'a pas encore été effectué, ladite première estimation de l'erreur de phase fournie auxdits moyens de retraitement est alors avantageusement constituée par ledit premier signal d'erreur issu dudit premier régénérateur, et lesdits moyens de retraitement comprennent des moyens de filtrage suivis par des seconds moyens d'intégration de l'erreur de phase filtrée à partir desquels est élaboré le signal correspondant à une seconde estimation de l'erreur de phase tel que fourni audit second modulateur complexe de la seconde structure auxiliaire.

Dans un mode réalisation avantageux, lesdits moyens de filtrage sont constitués par un sommateur (destiné à réduire la contribution du bruit gaussien) réalisant une moyenne glissante de ladite première information représentative dudit décalage de phase sur un nombre d'échantillons prédéterminé.

Si nécessaire, ladite seconde structure auxiliaire comporte un signal de correction issu du régénérateur de sortie et pilotant les moyens d'intégration.

Selon une autre caractéristique de l'invention, lesdits moyens d'intégration appartiennent au groupe comprenant les intégrateurs et les cascades d'intégrateurs.

L'invention concerne également les démodulateurs numériques équipés d'un dispositif de calage de phase tel que décrit précédemment ainsi que, avantageusement mais non exclusivement, l'application de tels dispositifs et démodulateurs aux signaux numériques en modulation MAQ d'ordre quelconque.

D'autres caractéristiques et avantages de l'invention apparaîtront à la lecture suivante de la description de modes de réalisation particuliers de l'invention, et des dessins annexés dans lesquels :
- la figure 1 représente une constellation d'états amplitude-phase illustrative d'une modulation de type MAQ à 4 états de phase, en schématisant le phénomène de gigue de phase ;
- la figure 2 représente un circuit classique de calage de phase, caractéristique de l'état de la technique ;
- la figure 3 représente un premier mode de réalisation d'un dispositif de calage de la phase d'un signal numérique suivant l'invention, correspondant au traitement d'un signal sur lequel la récupération de la phase de la porteuse a déjà été effectuée ;
- la figure 4 représente un second mode de réalisation d'un dispositif de calage de la phase d'un signal numérique suivant l'invention, correspondant au traitement d'un signal sur lequel la récupération de la fréquence de la porteuse n'a pas encore effectuée.

De façon classique, dans les circuits connus de calage de phase, le signal d'entrée 20 est fourni à un modulateur complexe (rotateur), qui apporte une correction en phase, et éventuellement en amplitude, du signal reçu. En sortie du rotateur 21, le signal corrigé est amené à un régénérateur 22 qui assure la régénération du signal en bande de base par échantillonnage et décision à seuil.

Le modulateur complexe 21 est piloté par un signal 24 représentatif de l'erreur de phase. Ce signal 24 est fourni par un intégrateur 25 de l'erreur de phase, alimenté par un signal d'erreur 26 fourni par le régénérateur 22. L'intégrateur d'erreur de phase 25 provoque l'émission du signal 24 via une ROM 28 (ou tout autre circuit équivalent) accédée par une information de décalage de phase 27 issue de l'intégrateur 25.

Cette boucle classique permet ainsi d'extraire la composante tangentielle 26 de l'erreur de phase, et à l'intégrer dans l'intégrateur 25 pour asservir le modulateur numérique 21.

Ce type de montage est soumis aux inconvénients rappelés en préambule.

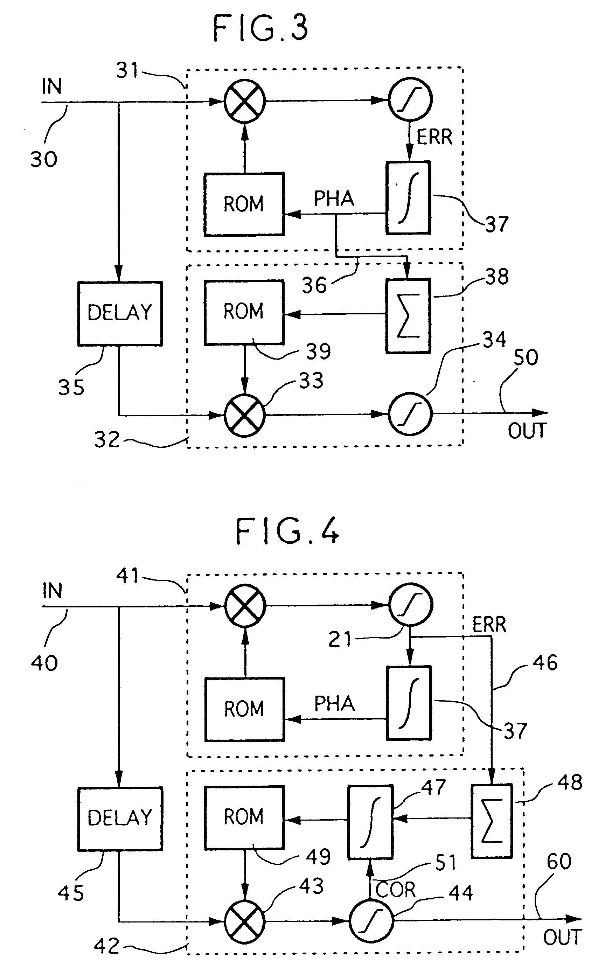

Comme représenté en figure 3, un premier mode de réalisation de l'invention est constitué de deux boucles enchaînées, à savoir:
- une première boucle 31, dite "boucle rapide" qui intègre le signal d'erreur sur une largeur de bande élevée, soit selon une intégration juste nécessaire pour assurer la stabilité ;
- une seconde boucle auxiliaire 32, qui reçoit une première estimation de l'erreur de phase fournie par la première boucle rapide 31, et assure un retraitement de cette estimation d'erreur de phase (en l'occurrence un filtrage pour réduire la contribution du bruit gaussien) avant de piloter un modulateur complexe auxiliaire 33. Le régénérateur de sortie 34, qui rétablit et décide le signal en bande de base, est alimenté par le modulateur numérique auxiliaire 33 qui traite directement le signal d'entrée du dispositif via des moyens de retard 35.

Ainsi, le régénérateur de sortie 34 va travailler sur un signal où la phase a été compensée à la vitesse de la boucle classique, mais après compensation du bruit gaussien dans la boucle auxiliaire 32.

La première boucle rapide 31 est constituée des mêmes composants que ceux d'une boucle classique, comme décrite à la figure 2. En revanche, il est clair que les paramètres de fonctionnement sont choisis pour avoir une boucle de verrouillage de phase la plus rapide possible.

De ce fait, la boucle rapide 31 travaille sur un signal présentant un bruit accru et un taux d'erreur plus élevé, mais il n'est utilisé que pour obtenir une estimation d'erreur de phase (retraitée dans la boucle auxiliaire 32), les données régénérées dans la première boucle rapide 31 n'étant pas utilisées.

La première estimation de l'erreur de phase 36 fournie à la boucle auxiliaire 32 est constituée par l'erreur de phase intégrée élaborée par l'intégrateur (25, 37) de la boucle rapide 31.

Cette erreur de phase intégrée 36 est apportée à des moyens de traitement 38 du circuit auxiliaire 32. Comme déjà mentionné, ces moyens de traitement 38 sont constitués par des moyens de filtrage, typiquement un sommateur réalisant une moyenne glissante du signal d'erreur de phase 36 sur un nombre d'échantillons prédéterminés.

D'autres moyens de filtrage peuvent être employés, dès lors qu'ils permettent d'aboutir au même résultat, c'est-à-dire réduire la contribution du bruit gaussien.

Le signal obtenu en sortie du sommateur 38 est utilisé pour piloter le modulateur complexe 33 via la ROM 39.

On notera que le circuit ROM 39 utilisé permet de transcrire l'erreur de phase intégrée et filtrée en une information susceptible de piloter adéquatement le modulateur complexe 33. Tout autre moyen équivalent peut être utilisé, à titre d'exemple un circuit fonctionnant selon l'algorithme Cordic, ou similaire.

Ce type de montage permet donc de corriger efficacement tant l'erreur de phase que la composante gaussienne affectant le signal reçu.

Il présente une application générale pour lutter contre l'instabilité des boucles classiques (figure 2) dans certaines conditions de fonctionnement.

Dans un cas particulier, dans lequel une erreur de phase importante est à corriger dans le signal, la première boucle rapide 31 permet d'extraire efficacement la composante tangentielle de la valeur de phase, sur une bande équivalente de bruit importante, la composante gaussienne affectant le signal étant ensuite compensée dans la boucle auxiliaire.

Dans le second mode de réalisation de l'invention schématisé en figure 4, le montage représenté correspond à une application dans laquelle le signal d'entrée 40 n'a pas été calé en fréquence. En d'autres termes, la constellation des états de phase est affectée d'une rotation, en plus de la gigue de phase.

La conception du dispositif de l'invention en deux boucles enchaînées permet de traiter ce cas de figure. En d'autres termes, l'invention fournit un dispositif suffisamment robuste pour être alimenté par un signal d'entrée dans lequel la porteuse n'a pas été (totalement) récupérée.

Dans ce mode de réalisation, la première boucle 41 joue un rôle tout à fait similaire à celui de la première boucle 31 du mode de réalisation de la figure 3. On y retrouve tout aussi bien les différents composants des boucles classiques, et notamment l'intégrateur 37 d'erreur de phase.

Toutefois, dans ce mode de réalisation, l'estimation d'erreur de phase fournie au circuit auxiliaire 42 est constituée par le signal d'erreur issu du régénérateur 22 de la première boucle 41.

Ce signal d'erreur 46 est fourni à un premier moyen de filtrage 48, de même nature que les moyens de filtrage 38 du mode de réalisation de la figure 3.

Le signal filtré est ensuite transmis à des moyens d'intégration 47. Ces moyens d'intégration 47 jouent un rôle analogue à ceux de la première boucle 41. Toutefois, elle intègre un signal préalablement filtré (par le sommateur 48) ce qui permet de gérer "proprement" les discontinuités de phase du signal.

Le reste des composants de la boucle auxiliaire (ROM 49, multiplicateur complexe 43, régénérateur de sortie 44) sont de même nature que les éléments correspondants du circuit auxiliaire 32 du mode de réalisation de la figure 3.

Dans un mode de réalisation optionnel, la boucle auxiliaire 42 peut être "refermée", afin d'assurer sa stabilité. Dans ce cas, un signal d'erreur 51 issu du régénérateur de sortie 44 peut piloter l'intégrateur 47. La constante de temps du signal 51 est très supérieure à la constante de temps de l'intégrateur 47 pour assurer la stabilité.

Par ailleurs, on notera que les moyens d'intégration 37, 47 peuvent être constitués d'un intégrateur uni, ou d'une cascade d'intégrateurs si nécessaire.

Au total, grâce au montage de la figure 4, on obtient un circuit qui permet de compenser les décalages en fréquence (offset de fréquence) du signal d'entrée 40. En effet, la première boucle rapide, à gain fort, permet de récupérer n'importe quel offset, le signal d'erreur étant ensuite retraité dans la boucle auxiliaire pour la régénération en bande de base.

Que ce soit dans le mode de réalisation de la figure 3 ou dans celui de la figure 4, on peut donc ainsi obtenir à la fois une bande de boucle rapide permettant de suivre l'erreur dans les fréquences élevées, et un niveau de bruit qui ne peut être obtenu qu'avec une boucle plus lente (dans la boucle auxiliaire). Le régénérateur de sortie 34, 44 peut ainsi travailler en conditions optimales.

Ce type de montage permet d'utiliser des oscillateurs locaux moins chers, avec des caractéristiques de bruit de phase notablement moins bonnes, sans dégrader les performances.

## Revendications

1. Dispositif de calage de la phase d'un signal numérique constitué par deux composantes numériques à corriger qui sont les composantes en phase et en quadrature, à chaque temps symbole, d'un signal reçu, ledit dispositif étant destiné à alimenter un régénérateur du signal en bande de base par échantillonnage et décision à seuil,
dispositif caractérisé en ce qu'il comprend une première boucle de verrouillage (31,41) de phase pilotée par un premier intégrateur (37) d'erreur de phase à large bande, ladite première boucle (31,41) étant alimentée par le signal d'entrée (30, 40) du dispositif et fournissant une première estimation de l'erreur de phase (36, 46),
en ce qu'il comprend en outre une seconde structure auxiliaire (32, 42) de verrouillage de phase pilotée par des moyens de retraitement (38 ; 47, 48) de ladite première estimation de l'erreur de phase (36, 46) élaborée par ladite première boucle de verrouillage de phase (31,41), et fournissant en sortie un signal calé en phase alimenté à un régénérateur de sortie (34, 44) assurant la régénération du signal en bande de base (50, 60),
et en ce que ladite seconde structure auxiliaire de verrouillage de phase (32, 42) est alimentée par ledit signal d'entrée (30, 40) du dispositif à travers des moyens de retard (35, 45).

2. Dispositif selon la revendication 1 caractérisé en ce que ladite première boucle de verrouillage de phase comprend :
- un premier modulateur complexe (21) auquel sont appliquées lesdites composantes numériques à corriger (30, 40) et fournissant des premières composantes numériques corrigées, ledit premier modulateur complexe (21) assurant la rotation de la constellation des états de phase dudit signal reçu en fonction d'une première information (24) représentative dudit décalage de phase ;
- un premier régénérateur (22) recevant lesdites premières composantes numériques corrigées et fournissant un premier signal d'erreur (26) ;
- ledit premier intégrateur à large bande (25, 37) recevant ledit premier signal d'erreur (26) et fournissant ladite première information (27) représentative dudit décalage de phase audit premier modulateur complexe (21).

3. Dispositif selon l'une quelconque des revendications 1 et 2 caractérisé en ce que les moyens de retraitement (38 ; 47, 48) de ladite seconde structure auxiliaire (32, 42) fournissent à un second modulateur complexe (33, 43) un signal correspondant à une seconde estimation de l'erreur de phase, lesdites composantes numériques étant appliquées, par l'intermédiaire desdits moyens de retard (35, 45), audit second modulateur complexe (33, 43), ledit second modulateur complexe (33, 43) fournissant des secondes composantes numériques corrigées audit régénérateur de sortie (34, 44).

4. Dispositif selon la revendication 3 (plus particulièrement destiné au calage de la phase de signaux d'entrée du dispositif pour lesquels la récupération de phase de la porteuse a déjà été effectuée) caractérisé en ce que ladite première estimation de l'erreur de phase fournie auxdits moyens de retraitement (38) est constituée par ladite première information représentative dudit décalage de phase (36) issue dudit premier intégrateur à large bande (37),
et en ce que lesdits moyens de retraitement (38) sont constitués par des moyens de filtrage.

5. Dispositif selon la revendication 3 (plus particulièrement destiné au calage de la phase de signaux d'entrée du dispositif pour lesquels le calage en fréquence de la porteuse n'a pas encore été effectué) caractérisé en ce que ladite première estimation de l'erreur de phase fournie auxdits moyens de retraitement (48, 47) est constituée par ledit premier signal d'erreur (26) issu dudit premier régénérateur (22),
et en ce que lesdits moyens de retraitement comprennent des moyens de filtrage (48) suivis par des seconds moyens (47) d'intégration de l'erreur de phase filtrée à partir desquels est élaboré le signal correspondant à une seconde estimation de l'erreur de phase tel que fourni audit second modulateur complexe (43) de la seconde structure auxiliaire (32).

6. Dispositif selon l'une quelconque des revendications 4 et 5 caractérisé en ce que lesdits moyens de filtrage (38, 48) sont constitués par un sommateur (destiné à réduire la contribution du bruit gaussien) réalisant une moyenne glissante de ladite première information (36, 46) représentative dudit décalage de phase sur un nombre d'échantillons prédéterminé.

7. Dispositif selon l'une quelconque des revendications 4 à 6 caractérisé en ce que ladite seconde structure auxiliaire (42) comporte un signal (51) de correction issu du régénérateur de sortie (44) et pilotant les moyens d'intégration (47).

8. Dispositif selon l'une quelconque des revendications 1 à 7 caractérisé en ce que lesdits moyens d'intégration (25 ; 37 ; 47) appartiennent au groupe comprenant les intégrateurs et les cascades d'intégrateurs.

9. Démodulateur numérique équipé d'un dispositif de calage de phase selon l'une quelconque des revendications précédentes.

10. Application du dispositif et du démodulateur selon l'une quelconque des revendications 1 à 9 aux signaux numériques en modulation MAQ d'ordre quelconque.
